# EUROPÄISCHE PATENTSCHRIFT

(11) **EP 1 217 039 B1**
(45) Veröffentlichungstag und Bekanntmachung des Hinweises auf die Patenterteilung: **21.07.2004**
(21) Anmeldenummer: 01125738.3
(22) Anmeldetag: 27.10.2001
(51) Int. Cl.: C08L 67/02

(54) **Leichtfliessende Polyester-Formmasse**
Easily flowable polyester moulding composition
Composition à mouler de polyester s'écoulant facilement

(30) Priorität: 21.12.2000 DE 10064335
(43) Veröffentlichungstag der Anmeldung: 26.06.2002
(73) Patentinhaber: Degussa AG, 40474 Düsseldorf (DE)
(72) Erfinder: Häger, Harald, Dr., 45665 Recklinghausen (DE); Schüler, Ralf, Dr., 45659 Recklinghausen (DE); Peirick, Heinz, 48653 Coesfeld (DE); Richter, Ralf, Dr., 45657 Recklinghausen (DE)

(56) Entgegenhaltungen:
- EP-A- 1 065 048
- EP-A- 1 120 443
- DE-A- 1 915 772
- DE-A- 3 031 491

## Beschreibung

Gegenstand der Erfindung ist eine leichtfließende Polyesterformmasse insbesondere für den Spritzguß sowie ein aus dieser Polyesterformmasse hergestelltes Formteil.

In der Elektrotechnik- und der Elektronikindustrie geht der Trend zu immer kleineren Bauteilen. Dabei nehmen die Anforderungen an die Fließfähigkeit von Kunststoffen ständig zu.

Ein einfacher Weg, die Fließfähigkeit von Kunststoffen zu verbessern, besteht in einer Verringerung des Molekulargewichts. Allerdings gibt es hier gewisse Grenzen, da bei einer zu drastischen Verringerung des Molekulargewichts auch die mechanischen Eigenschaften der Kunststoffe negativ beeinflusst werden.

Anstatt das Molekulargewicht zu reduzieren besteht auch die Möglichkeit, durch Fließverbesserer wie etwa Stearate oder Montansäureester das Fließverhalten von Kunststoffen zu verbessern. Beispielsweise beschreiben die JP-A-04 275 327 und die DE-A-30 31 491 die Verbesserung der Fließfähigkeit von Polyestern durch Zusatz von Pentaerythroltetrastearat. Derartige niedermolekulare Ester können jedoch bei der Verarbeitung bzw. während des Gebrauchs des damit hergestellten Formteils ausschwitzen. Ausserdem sind derartige rein aliphatische Estergruppen hydrolyseanfällig, wobei die Abbauprodukte ausschwitzen bzw. die Polyestermatrix schädigen können. Auch bei der Verwendung von Trisalkylestem der Phosphorsäure, wie in der JP-A-55 012 103 beschrieben, treten diese Probleme auf.

In der JP-A-11 049 939 und der JP-A-03 095 256 wird vorgeschlagen, einen Polyester mit Benzoesäureestern von Polyalkenylglykolen zu mischen, um die Fließfähigkeit zu verbessern. Beim Schmelzemischen kommt es hierbei aber - wie auch in den oben genannten Fällen, bei denen andere Ester zugesetzt werden - zu Umesterungsreaktionen. Im vorliegenden Fall entsteht ein Blockcopolyetherester, also ein Polymeres, das als thermoplastisches Elastomer ein ganz anderes Eigenschaftsprofil aufweist.

Es bestand daher die Aufgabe, die Fließfähigkeit von Polyestern zu verbessern, wobei die mechanischen Eigenschaften des Polyesters im wesentlichen unbeeinträchtigt bleiben sollten, ohne dass der zugesetzte Fließverbesserer beim Verarbeiten oder beim Formteil ausschwitzt.

Diese Aufgabe wird durch eine Formmasse gelöst, die 80 bis 99,9 Gew.-Teile thermoplastischen Polyester und 0,1 bis 20 Gew.-Teile eines weiter unten näher beschriebenen Polyamin/Polyamid-Pfropfcopolymeren enthält, wobei sich die Gew.-Teile des Polyesters und des Pfropfcopolymers zu 100 addieren.

Ähnliche Gemische sind in der DE-A-19 15 772 beschrieben. Dort wird ein für die Herstellung eines leicht färbbaren Fadens, Bandes oder dergleichen geeignetes Gemisch offenbart, das 5 bis 80 Gew.-% eines Polyimin/Polyamid-Pfropfcopolymers und 95 bis 20 Gew.-% eines Polyesters enthalt. Diese Gemische werden aber nicht zur Herstellung von Formteilen verwendet. Aus der DE-A-19 15 772 geht auch nicht hervor, dass das Pfropfcopolymer als Fließhilfsmittel für Polyesterformmassen geeignet ist. Darüber hinaus wurde dort nicht erkannt, dass im nunmehr beanspruchten Bereich der Polyester und das Pfropfcopolymer so gut miteinander verträglich sind, dass die mechanischen Eigenschaften des Polyesters weitestgehend unbeeinträchtigt bleiben. Die Ergebnisse der DE-A-19 15 772 sprechen eher dafür, dass wie im dortigen Beispiel 3 ausgeführt, eine Mischung aus 50 Teilen Pfropfcopolymer und 50 Teilen Polyethylenterephthalat so unverträglich ist, dass sie bei mechanischer Beanspruchung delaminiert. Ein derartiges Ergebnis ist eher geeignet, den Fachmann davon abzuhalten, zur Formteilherstellung Formmassen zu untersuchen, die Polyester und derartige Pfropfcopolymere enthalten.

Schließlich werden in der nicht vorveröffentlichten deutschen Patentanmeldung 100 05 641.5 bzw. der EP-A-1 065 048 Formmassen offenbart, die mindestens 5 Gew.-Teile eines Polyamin/Polyamid-Pfropfcopolymers und bis zu 95 Gew.-Teile Polyester oder ein Gemisch aus Polyester und Polyamid enthalten. Diese Formmassen werden als Haftvermittler in Mehrschichtverbunden verwendet.

Ein erster Aspekt der vorliegenden Erfindung beruht darauf, eine Formmasse zur Verfügung zu stellen, die folgende Komponenten enthält:
I. 0,1 bis weniger als 5 Gew.-Teile, bevorzugt mindestens 0,2 Gew.-Teile und besonders bevorzugt mindestens 0,3 Gew.-Teile eines weiter unten näher beschriebenen Polyamin/Polyamid-Pfropfcopolymeren und
II. mehr als 95 bis 99,9 Gew.Teile eines thermoplastischen Polyesters,
wobei die Gew.-Teile von I. und II. in der Summe 100 ergeben.

Gegenstand der Erfindung sind auch Formteile, die unter Verwendung dieser Formmasse hergestellt wurden.

Ein zweiter Aspekt der vorliegenden Erfindung beruht darauf, eine Spritzgußformmasse zur Verfügung zu stellen, die folgende Komponenten enthält:
I. 0,1 bis 20 Gew.-Teile, bevorzugt 0,2 bis 10 Gew.-Teile und besonders bevorzugt mindestens 0,3 bis weniger als 5 Gew.-Teile eines weiter unten näher beschriebenen Polyamin/Polyamid-Pfropfcopolymeren und
II. 80 bis 99,9 Gew.-Teile, bevorzugt 90 bis 99,8 Gew.-Teile und besonders bevorzugt mehr als 95 bis 99,7 Gew.-Teile eines thermoplastischen Polyesters,
wobei die Gew.-Teile von I. und II. in der Summe 100 ergeben.

Gegenstand der Erfindung sind auch Formteile, die unter Verwendung dieser Spritzgußformmasse durch Spritzgießen hergestellt wurden.

Ein dritter Aspekt der Erfindung beruht darauf, eine Formmasse zur Verfügung zu stellen, die folgende Komponenten enthält:
A. 40 bis 99,5 Gew.-% einer Mischung aus
   I. 0,1 bis 20 Gew.-Teilen, bevorzugt 0,2 bis 10 Gew.-Teilen und besonders bevorzugt 0,3 bis weniger als 5 Gew.-Teilen eines weiter unten näher beschriebenen Polyamin/Polyamid-Pfropfcopolymeren und
   II. 80 bis 99,9 Gew.-Teilen, bevorzugt 90 bis 99,8 Gew.-Teilen und besonders bevorzugt mehr als 95 bis 99,7 Gew.-Teilen eines thermoplastischen Polyesters,
   wobei die Gew.-Teile von I. und II. in der Summe 100 ergeben;
B. 0,5 bis 60 Gew.-%, bevorzugt 2 bis 55 Gew.-% und besonders bevorzugt 4 bis 50 Gew.-%, teilchenförmiger, blättchenförmiger oder faserförmiger Zusätze, ausgewählt aus Füllstoffen, Pigmenten, Verstärkungsstoffen, Zusätzen, die der Formmasse antielektrostatische Eigenschaften oder eine elektrische Leitfähigkeit verleihen, Nukleierungsmitteln und partikelformigen Flammschutzmitteln.

Dank der fließverbessernden Wirkung des Pfropfcopolymers kann der viskositätserhöhenden Wirkung der Komponente B. entgegengewirkt werden, so dass besonders hochgefüllte Formmassen hergestellt werden können.

Gegenstand der Erfindung sind auch Formteile, die unter Verwendung dieser Formmasse hergestellt wurden.

Thermoplastische Polyester werden durch Polykondensation von Diolen mit Dicarbonsäuren bzw. deren polyesterbildenden Derivaten wie Dimethylestern hergestellt. Geeignete Diole haben die Formel HO-R-OH, wobei R einen divalenten, verzweigten oder unverzweigten aliphatischen und/oder cycloaliphatischen Rest mit 2 bis 40, vorzugsweise 2 bis 12, C-Atomen darstellt. Geeignete Dicarbonsäuren haben die Formel HOOC-R'-COOH, wobei R' einen divalenten aromatischen Rest mit 6 bis 20, vorzugsweise 6 bis 12, C-Atomen bedeutet.

Als Beispiel für Diole seien Ethylenglykol, Trimethylenglykol, Tetramethylenglykol, 2-Butendiol-1.4, Hexamethylenglykol, Neopentylglykol, Cyclohexandimethanol sowie das C₃₆-Diol Dimerdiol genannt. Die Diole können alleine oder als Diolgemisch eingesetzt werden.

Als aromatische Dicarbonsäuren kommen z. B. Terephthalsäure, Isophthalsäure, 1.4-, 1.5-, 2.6- bzw. 2.7-Naphthalindicarbonsäure, Diphensäure und Diphenylether-4.4'-dicarbonsäure infrage. Bis zu 30 Mol-% dieser Dicarbonsäuren können durch aliphatische oder cycloaliphatische Dicarbonsäuren mit 3 bis 50 C-Atomen und bevorzugt mit 6 bis 40 C-Atomen wie z. B. Bernsteinsäure, Adipinsäure, Sebacinsäure, Dodecandisäure oder Cyclohexan-1.4-dicarbonsäure ersetzt sein.

Beispiele für geeignete Polyester sind Polyethylenterephthalat, Polypropylenterephthalat, Polybutylenterephthalat, Polyethylen-2.6-naphthalat, Polypropylen-2.6-naphthalat und Polybutylen-2.6-naphthalat.

Die Herstellung dieser Polyester gehört zum Stand der Technik (DE-OSS 24 07 155, 24 07 156; Ullmanns Encyclopädie der technischen Chemie, 4. Aufl., Bd. 19, Seiten 65 ff., Verlag Chemie, Weinheim, 1980).

Das Polyamin/Polyamid-Pfropfcopolymer wird unter Verwendung folgender Monomere hergestellt:
a) 0,5 bis 25 Gew.-%, bevorzugt 1 bis 20 Gew.-% und besonders bevorzugt 1,5 bis 16 Gew.-%, bezogen auf das Pfropfcopolymer, eines verzweigten Polyamins mit mindestens 4, bevorzugt mindestens 8 und besonders bevorzugt mindestens 11 Stickstoffatomen und einem zahlenmittleren Molekulargewicht Mₙ von mindestens 146 g/mol, bevorzugt von mindestens 500 g/mol und besonders bevorzugt von mindestens 800 g/mol sowie
b) polyamidbildende Monomere, ausgewählt aus Lactamen, ω-Aminocarbonsäuren und/oder äquimolaren Kombinationen von Diamin und Dicarbonsäure.

In einer bevorzugten Ausführungsform liegt die Aminogruppenkonzentration des Polyamin/Polyamid-Copolymers im Bereich von 100 bis 2 500 mmol/kg.

Als verzweigtes Polyamin können beispielsweise folgende Substanzklassen verwendet werden:
- Dendrimere wie beispielsweise
   ((H₂N-(CH₂)₃)₂N-(CH₂)₃)₂-N(CH₂)₂-N((CH₂)₂-N((CH₂)₃-NH₂)₂)₂
   (DE-A-196 54 179),
   Tris(2-aminoethyl)amin, N,N-Bis(2-aminoethyl)-N',N'-bis[2-[bis(2-aminoethyl)amino]ethyl]-1,2-ethandiamin,
   3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000 - 1004);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Als polyamidbildende Monomere können alle diejenigen Monomere eingesetzt werden, die für die Herstellung von Polyamiden geeignet sind, insbesondere Lactame und/oder ω-Aminocarbonsäuren. Besonders bevorzugt werden ε-Caprolactam, ω-Aminoundecansäure und/oder Laurinlactam verwendet. Es kann aber auch eine äquivalente Kombination von Diamin und Dicarbonsäure eingesetzt werden, gegebenenfalls zusammen mit einem Lactam und/oder einer ω-Aminocarbonsäure. Grundsätzlich sind beispielsweise folgende Monomere geeignet:
- verzweigte oder unverzweigte aliphatische Diamine mit 6 bis 14 C-Atomen wie z. B. 1.6-Hexamethylendiamin, 2-Methyl-1.5-diaminopentan, 2.2.4- bzw. 2.4.4-Trimethylhexamethylendiamin, 1.9-Nonamethylendiamin, 1.10-Decamethylendiamin oder 1.12-Dodecamethylendiamin;
- cycloaliphatische Diamine mit 6 bis 22 C-Atomen wie z. B. 4.4'-Diaminodicyclohexylmethan, 3.3'-Dimethyl-4.4'-diaminodicyclohexylmethan, 4.4'-Diaminodicyclohexylpropan, 1.4-Diaminocyclohexan, 1.4-Bis(aminomethyl)-cyclohexan, 2.6-Bis(aminomethyl)-norbornan oder 3-Aminomethyl-3.5.5-trimethylcyclohexylamin;
- araliphatische Diamine mit 8 bis 22 C-Atomen wie z. B. m- oder p-Xylylendiamin oder Bis(4-aminophenyl)propan;
- verzweigte oder unverzweigte aliphatische Dicarbonsäuren mit 6 bis 22 C-Atomen wie z. B. Adipinsäure, 2.2.4- bzw. 2.4.4-Trimethyladipinsäure, Azelainsäure, Sebacinsäure oder 1.12-Dodecandisäure;
- cycloaliphatische Dicarbonsäuren mit 6 bis 22 C-Atomen wie z. B. Cyclohexan-1.4-dicarbonsäure, 4.4'-Dicarboxyldicyclohexylmethan, 3.3'-Dimethyl-4.4'-dicarboxyldicyclohexylmethan, 4.4'-Dicarboxyldicyclohexylpropan und 1.4-Bis(carboxymethyl)cyclohexan;
- araliphatische Dicarbonsäuren mit 8 bis 22 C-Atomen wie z. B. 4.4'-Diphenylmethandicarbonsäure;
- aromatische Dicarbonsäuren mit 8 bis 22 C-Atomen wie z. B. Isophthalsäure, Tributylisophthalsäure, Terephthalsäure, 1.4-, 1.5-, 2.6- bzw. 2.7-Naphthalindicarbonsäure, Diphensäure oder Diphenylether-4.4'-dicarbonsäure;
- Lactame mit 6 bis 12 C-Atomen bzw. die entsprechenden ω-Aminocarbonsäuren wie z. B. ε-Caprolactam, ε-Aminocapronsäure, Capryllactam, ω-Aminocaprylsäure, ω-Aminoundecansäure, Laurinlactam oder ω-Aminododecansäure.

In einer möglichen Ausführungsform wird das Pfropfcopolymer zusätzlich unter Verwendung einer Oligocarbonsäure hergestellt, die ausgewählt ist aus 0,015 bis etwa 3 Mol-% Dicarbonsäure und 0,01 bis etwa 1,2 Mol-% Tricarbonsäure, jeweils bezogen auf die Summe der übrigen polyamidbildenden Monomere. Bei dieser Bezugnahme wird bei der äquivalenten Kombination von Diamin und Dicarbonsäure jedes dieser Monomere einzeln betrachtet. Wird eine Dicarbonsäure verwendet, setzt man bevorzugt 0,03 bis 2,2 Mol-%, besonders bevorzugt 0,05 bis 1,5 Mol-%, ganz besonders bevorzugt 0,1 bis 1 Mol-% und insbesondere 0,15 bis 0,65 Mol-% zu; verwendet man eine Tricarbonsäure, so nimmt man vorzugsweise 0,02 bis 0,9 Mol-%, besonders bevorzugt 0,025 bis 0,6 Mol-%, ganz besonders bevorzugt 0,03 bis 0,4 Mol-% und insbesondere 0,04 bis 0,25 Mol-%. Durch die Mitverwendung der Oligocarbonsäure wird die Lösemittel- und Hydrolysebeständigkeit des Pfropfcopolymers signifikant verbessert.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2,6-Naphthalindicarbonsäure, Cyclohexan-1.4-dicarbonsäure, Trimesinsaure und/oder Trimellitsäure.

Zusätzlich können, falls gewünscht, aliphatische, alicyclische, aromatische, aralkylische und/oder alkylarylsubstituierte Monocarbonsäuren mit 3 bis 50 Kohlenstoffatomen wie z. B. Laurylsäure, ungesättigte Fettsäuren, Acrylsäure oder Benzoesäure als Regler eingesetzt werden. Mit diesen Reglern kann die Konzentration an Aminogruppen verringert werden, ohne die Molekülgestalt zu verändern. Zusätzlich können auf diese Weise funktionelle Gruppen wie Doppel- bzw. Dreifachbindungen etc. eingeführt werden. Es ist aber erwünscht, daß das Pfropfcopolymer einen substantiellen Anteil an Aminogruppen besitzt. Vorzugsweise liegt die Aminogruppenkonzentration des Pfropfcopolymers im Bereich von 150 bis 1 500 mmol/kg, besonders bevorzugt im Bereich von 250 bis 1 300 mmol/kg und ganz besonders bevorzugt im Bereich von 300 bis 1 100 mmol/kg. Unter Aminogruppen werden hier und im folgenden nicht nur Aminoendgruppen, sondern auch gegebenenfalls vorhandene sekundäre bzw. tertiäre Aminfunktionen des Polyamins verstanden.

Die erfindungsgemäßen Pfropfcopolymere können nach verschiedenen Verfahren hergestellt werden.

Eine Möglichkeit besteht darin, Lactam bzw. ω-Aminocarbonsäure und Polyamin zusammen vorzugeben und die Polymerisation bzw. die Polykondensation durchzuführen. Die Oligocarbonsäure kann entweder am Anfang oder im Verlauf der Reaktion zugegeben werden.

Ein bevorzugtes Verfahren besteht jedoch darin, daß in einem zweistufigen Prozeß zuerst die Lactamspaltung und Präpolymerisation in Gegenwart von Wasser durchgeführt wird (alternativ werden die entsprechenden ω-Aminocarbonsäuren bzw. Diamine und Dicarbonsäuren direkt eingesetzt und präpolymerisiert); im zweiten Schritt wird das Polyamin zugegeben, während die gegebenenfalls mitverwendete Oligocarbonsäure vor, während oder nach der Präpolymerisation zudosiert wird. Dann wird bei Temperaturen zwischen 200 und 290 °C entspannt und im Stickstoffstrom oder im Vakuum polykondensiert.

Ein weiteres bevorzugtes Verfahren besteht im hydrolytischen Abbau eines Polyamids zu einem Präpolymer und gleichzeitige oder anschließende Reaktion mit dem Polyamin. Vorzugsweise werden Polyamide verwendet, bei denen die Endgruppendifferenz näherungsweise Null beträgt, oder bei denen die gegebenenfalls mitverwendete Oligocarbonsäure bereits einpolykondensiert ist. Die Oligocarbonsäure kann aber auch zu Anfang oder im Laufe der Abbaureaktion zugegeben werden.

Mit diesen Verfahren lassen sich ultrahochverzweigte Polyamide mit Säurezahlen kleiner als 40 mmol/kg, bevorzugt kleiner als 20 mmol/kg und besonders bevorzugt kleiner als 10 mmol/kg herstellen. Schon nach ein- bis fünfstündiger Reaktionszeit bei Temperaturen von 200 °C bis 290 °C wird ein annähernd vollständiger Umsatz erzielt.

Falls gewünscht, kann in einem weiteren Verfahrensschritt eine mehrstündige Vakuumphase angeschlossen werden. Diese dauert mindestens vier Stunden, bevorzugt mindestens sechs Stunden und besonders bevorzugt mindestens acht Stunden bei 200 bis 290 °C. Nach einer Induktionsperiode von mehreren Stunden wird dann eine Erhöhung der Schmelzeviskosität beobachtet, was darauf zurückzuführen sein dürfte, daß eine Reaktion von Aminoendgruppen miteinander unter Ammoniakabspaltung und Kettenverknüpfung stattfindet.

Falls man die Reaktion nicht in der Schmelze zu Ende führen will, kann das Pfropfcopolymer gemäß dem für Polyamide geltenden Stand der Technik auch in fester Phase nachkondensiert werden.

Der Polyester und das Pfropfcopolymere können nach allen Methoden des Standes der Technik miteinander gemischt werden. Vorzugsweise mischt man in einem knetenden Aggregat in der Schmelze.

Neben diesen beiden Komponenten I. und II. kann die Formmasse bis zu insgesamt 60 Gew.-% noch Zusatzstoffe enthalten, die ausgewählt sind aus
- für Polyester üblichen Schlagzähmachern, beispielsweise Ethylen/α-Olefin-Copolymeren (insbesondere EPM und EPDM) oder Styrol-Ethylen/Butylen-Blockcopolymeren (insbesondere SEBS), wobei in allen diesen Fällen der Schlagzähmacher zusätzlich funktionelle Gruppen wie z. B. Säureanhydrid trägt, oder auch α-Olefin/Acrylester-Terpolymere mit einem olefinisch ungesättigten Säureanhydrid, Glycidylacrylat oder Glycidylmethacrylat als Terkomponente;
- andere Polymere wie beispielsweise Polycarbonat, (Meth)Acrylat-Homo- und Copolymere, Styrol-Acrylnitril-Copolymere, Acrylnitril-Butadien-Styrol-Copolymere (ABS);
- Füllstoffe und Pigmente wie Ruß, Titandioxid, Glaskugeln, Hohlglaskugeln, Talkum, Zinksulfid, Silikate oder Carbonate;
- Verstärkungsstoffe wie Glasfasern, Aramidfasern oder Whiskers;
- Zusätze, die der Formmasse antielektrostatische Eigenschaften oder eine elektrische Leitfähigkeit verleihen wie z. B. Carbonfasern, Graphitfibrillen, Fasern aus rostfreiem Stahl oder Leitfähigkeitsruß;
- partikelförmige Flammschutzmittel wie Magnesiumhydroxid, Aluminiumhydroxid oder Melamincyanurat;
- übliche Hilfs- bzw. Zusatzstoffe wie z. B. Weichmacher, Wachse, Nukleierungsmittel, andere Flammschutzmittel, Antioxidantien, UV-Stabilisatoren oder Hydrolysestabilisatoren.

Die erfindungsgemäßen Formmassen dienen zur Herstellung von Formteilen jeglicher Art, insbesondere für den Bereich der Elektrotechnik- und der Elektronikindustrie. Gemäß dem ersten und dem dritten Aspekt der Erfindung können Formteile nach allen Methoden des Standes der Technik hergestellt werden, beispielsweise durch Extrusion, Blasformen, Tiefziehen und Spritzgießen [auch GIT (Gasinjektionstechnik) oder WIT (Wasserinjektionstechnik)] , während die Formteile aus der Formmasse gemäß dem zweiten Aspekt der Erfindung generell mittels Spritzgießen (auch GIT oder WIT) hergestellt werden. In allen diesen Fällen kann es sich bei den Formteilen um einen Mehrschichtverbund handeln, der eine oder mehrere Schichten aus der erfindungsgemäßen Formmasse enthält, oder aber das Formteil besteht vollständig aus der erfindungsgemäßen Formmasse. In Mehrschichtverbunden können der oder die Verbundpartner andere thermoplastische Formmassen sein, wie etwa in Kraftstoffleitungen für Automobile, oder es handelt sich um ein vulkanisiertes Kautschukcompound. Entsprechende Verbunde mit bekannten Polyesterformmassen sind Stand der Technik.

Die erfindungsgemäße Formmasse wird besonders vorteilhaft für kleindimensionierte Formteile, insbesondere Spritzgußformteile, verwendet, beispielsweise für Steckverbinder in der Elektronikindustrie.

Im Folgenden soll die Erfindung beispielhaft erläutert werden.

### Vergleichsbeispiel 1 (Kontrolle)

In einem Zweischneckenextruder wurde durch Schmelzemischen eine Formmasse mit folgender Zusammensetzung hergestellt:
100 Gew.-Teile VESTODUR® 1000, ein Polybutylenterepthalat der DEGUSSA-HÜLS AG,
17,5 Gew.-Teile eines bromhaltigen Flammschutzmittels,
10 Gew.-Teile Antimonoxid als Synergist,
105 Gew.-Teile Glasfaser,
1 Gew.-Teil üblicher Stabilisatoren und
0,5 Gew.-Teile eines üblichen Entformungshilfsmittels.

Von der Formmasse wurden die mechanischen und rheologischen Eigenschaften bestimmt; die Ergebnisse sind in der Tabelle 1 wiedergegeben.

### Herstellung eines Polyamin/Polyamid-Pfropfcopolymers:

4,78 kg Laurinlactam wurden in einem Aufheizkessel bei 180 bis 210 °C aufgeschmolzen und in einen druckfesten Polykondensationskessel überführt. Dann wurden 250 ml Wasser und 57 ppm Hypophosphorige Säure zugegeben. Die Laurinlactamspaltung wurde bei 280 °C unter dem sich einstellenden Eigendruck durchgeführt. Anschließend wurde innerhalb von 3 h auf einen Restwasserdampfdruck von 3 bar entspannt und 230 g Polyethylenimin (LUPASOL® G 100, BASF AG, Ludwigshafen) zugegeben. Danach wurde auf Normaldruck entspannt und unter Überleiten von Stickstoff 2 h bei 250 °C polykondensiert. Die klare Schmelze wurde über eine Schmelzepumpe als Strang ausgetragen, im Wasserbad abgekühlt und anschließend granuliert.

Das erhaltene Pfropfcopolymer hatte einen Polyethyleniminanteil von 4,5 Gew.-% und einen PA12-Anteil von 95,5 Gew.-%.

### Beispiele 1 bis 3:

Wie im Vergleichsbeispiel 1 wurde eine Formmasse hergestellt, mit dem alleinigen Unterschied, dass zusätzlich die in der Tabelle 1 angegebene Menge des Polyamin/Polyamid-Pfropfcopolymers zugegeben wurde. Die Ergebnisse sind in der Tabelle 1 wiedergegeben.

### Vergleichsbeispiel 2:

Wie im Vergleichsbeispiel 1 wurde eine Formmasse hergestellt, mit dem alleinigen Unterschied, dass zusätzlich auf 100 Gew.-Teile der Formmasse 1,0 Gew.-Teil Ceasit PC (Calciumstearat) als Fließhilfsmittel zugegeben wurde. Die Ergebnisse sind in der Tabelle 1 wiedergegeben.

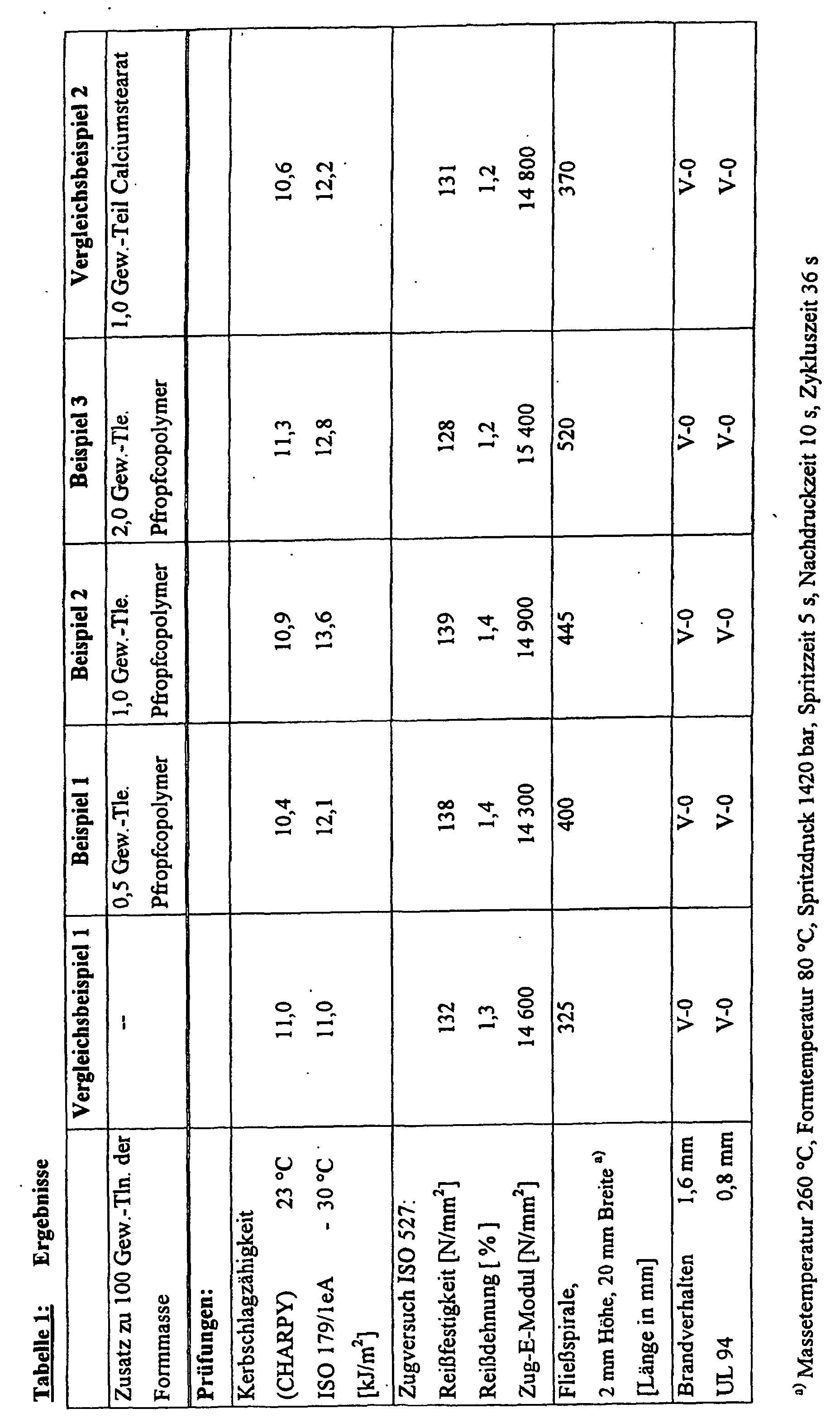

Man erkennt aus der Tabelle 1, dass die erfindungsgemäße Formmasse schon bei geringen Zusätzen eines Polyamin/Polyamid-Pfropfcopolymers ein deutlich besseres Fließvermögen besitzt als bei Zugabe einer vergleichbaren Menge eines konventionellen Fließhilfsmittels. Dabei bleiben die mechanischen Eigenschaften der Formmasse weitestgehend erhalten.

## Patentansprüche

1. Formmasse, die folgende Komponenten enthält:
I. 0,1 bis weniger als 5 Gew.-Teile eines Polyamin/Polyamid-Pfropfcopolymeren, das unter Verwendung folgender Monomere hergestellt wird:
a) 0,5 bis 25 Gew.-%, bezogen auf das Pfropfcopolymer, eines verzweigten Polyamins mit mindestens 4 Stickstoffatomen und einem zahlenmittleren Molekulargewicht Mₙ von mindestens 146 g/mol sowie
b) polyamidbildende Monomere, ausgewählt aus Lactamen, ω-Aminocarbonsäuren und/oder äquimolaren Kombinationen von Diamin und Dicarbonsäure,
II. mehr als 95 bis 99,9 Gew.Teile eines thermoplastischen Polyesters,
wobei die Summe der Gew.-Teile von I. und II. 100 ergibt.

2. Spritzgußformmasse bestehend aus:
A. mindestens 40 Ges.-% einer Mischung von
I. 0,1 bis 20 Gew.-Teile eines Polyamin/Polyamid-Pfropfcopolymeren, das unter Verwendung folgender Monomere hergestellt wird:
a) 0,5 bis 25 Gew.-%, bezogen auf das Pfropfcopolymer, eines verzweigten Polyamins mit mindestens 4 Stickstoffatomen und einem zahlenmittleren Molekulargewicht Mₙ von mindestens 146 g/mol sowie
. b) polyamidbildende Monomere, ausgewählt aus Lactamen, ω-Aminocarbonsäuren und/oder äquimolaren Kombinationen von Diamin und Dicarbonsäure,
II. 80 bis 99,9 Gew.-Teile eines thermoplastischen Polyesters,
wobei die Summe der Gew.-Teile von I. und 11.100 ergibt;
B maximal 60 Gew.-% an Zusatzstoffen, die ausgewählt sind aus
- für Polyester üblichen Schlagzähmachern,
- anderen Polymeren, die ausgewählt sind aus Polycarbonat, Acrylat-Homo- und - Copolymeren, Methacrylat-Homo- und Copolymeren, Styrol-Acrylnitril-Copolymeren und Acrylnitril-Butadien-Styrol-Copolymeren (ABS),
- Füllstoffen,
- Pigmenten,
- Verstärkungsstoffen,
- Zusätzen, die der Formmasse antielektrostatische Eigenschaften oder eine elektrische Leitfähigkeit verleihen,
- Flammschutzmitteln und
- üblichen Hilfs- bzw. Zusatzstoffen, ausgewählt aus Weichmachern, Wachsen, Nucleierungsmitteln, Antioxidantien, UV-Stabilisatoren und Hydrolysestabilisatoren.

3. Formmasse, bestehend aus:
A. 40 bis 99,5 Gew.-% einer Mischung aus
I. 0,1 bis 20 Gew.-Teilen eines Polyamin/Polyamid-Pfropfcopolymeren, das unter Verwendung folgender Monomere hergestellt wird:
a) 0,5 bis 25 Gew.-%, bezogen auf das Pfropfcopolymer, eines verzweigten Polyamins mit mindestens 4 Stickstoffatomen und einem zahlenmittleren Molekulargewicht Mₙ von mindestens 146 g/mol sowie
b) polyamidbildende Monomere, ausgewählt aus Lactamen, ω-Aminocarbonsäuren und/oder äquimolaren Kombinationen von Diamin und Dicarbonsäure,
II. 80 bis 99,9 Gew.-Teilen eines thermoplastischen Polyesters,
wobei die Summe der Gew.-Teile von I. und II. 100 ergibt,
B. 0,5 bis 60 Gew.-% teilchenförmiger, blättchenförmiger und/oder faserförmiger Zusätze, ausgewählt aus Füllstoffen, Pigmenten, Verstärkungsstoffen, Zusätzen, die der Formmasse antielektrostatische Eigenschaften oder eine elektrische Leitfähigkeit verleihen, Nukleierungsmitteln und partikelformigen Flammschutzmitteln,
C. maximal 59,5 Gew.-% Zusatzstoffen, die ausgewählt sind aus
- für Polyester üblichen Schlagzähmachern,
- anderen Polymeren, die ausgewählt sind aus Polycarbonat, Acrylat-Homo- und - Copolymeren, Methacrylat-Homo- und Copolymeren, Styrol-Acrylnitril-Copolymeren und Acrylnitril-Butadien-Styrol-Copolymeren (ABS),
- üblichen Hilfs- bzw. Zusatzstoffen, ausgewählt aus Weichmachern, Wachsen, Nucleierungsmitteln, Antioxidantien, UV-Stabilisatoren und Hydrolysestabilisatoren.

4. Formmasse bzw. Spitzgußformmasse gemäß einem der vorhergehenden Ansprüche,
**dadurch gekennzeichnet,**
**dass** der thermoplastische Polyester ausgewählt ist aus der Gruppe Polyethylenterephthalat, Polypropylenterephthalat, Polybutylenterephthalat, Polyethylen-2.6-naphthalat, Polypropylen-2.6-naphthalat und Polybutylen-2.6-naphthalat.

5. Formmasse bzw. Spritzgußformmasse gemäß einem der vorhergehenden Ansprüche,
**dadurch gekennzeichnet,**
**dass** das Polyamin/Polyamid-Pfropfcopolymer unter Verwendung von 1 bis 20 Gew.-% des Polyamins hergestellt wird.

6. Formmasse bzw. Spritzgußformmasse gemäß einem der vorhergehenden Ansprüche,
**dadurch gekennzeichnet,**
**dass** das Polyamin/Polyamid-Pfropfcopolymer unter Verwendung von 1,5 bis 16 Gew.-% des Polyamins hergestellt wird.

7. Formmasse bzw. Spritzgußformmasse gemäß einem der vorhergehenden Ansprüche,
**dadurch gekennzeichnet,**
**dass** das Polyamin mindestens 8 Stickstoffatome enthält.

8. Formmasse bzw. Spritzgußformmasse gemäß einem der vorhergehenden Ansprüche,
**dadurch gekennzeichnet,**
**dass** das Polyamin mindestens 11 Stickstoffatome enthält.

9. Formmasse bzw. Spritzgußformmasse gemäß einem der vorhergehenden Ansprüche,
**dadurch gekennzeichnet,**
**dass** das Polyamin ein zahlenmittleres Molekulargewicht Mₙ von mindestens 500 g/mol besitzt.

10. Formmasse bzw. Spritzgußformmasse gemäß einem der vorhergehenden Ansprüche,
**dadurch gekennzeichnet,**
**dass** das Polyamin ein zahlenmittleres Molekulargewicht Mₙ von mindestens 800 g/mol besitzt.

11. Formmasse bzw. Spritzgußformmasse gemäß einem der vorhergehenden Ansprüche,
**dadurch gekennzeichnet,**
**dass** die Aminogruppenkonzentration des Pfropfcopolymers im Bereich von 100 bis 2500 mmol/kg liegt.

12. Formteil, hergestellt unter Verwendung einer Formmasse bzw. Spritzgußformmasse gemäß einem der vorhergehenden Ansprüche.

13. Formteil gemäß Anspruch 12,
**dadurch gekennzeichnet,**
**dass** es ein Mehrschichtverbund ist, der eine oder mehrere Schichten aus einer Formmasse bzw. Spritzgußformmasse gemäß einem der Ansprüche 1 bis 11 enthält

14. Formteil gemäß Anspruch 12,
**dadurch gekennzeichnet,**
**dass** es vollständig aus einer Formmasse bzw. Spritzgußformmasse gemäß einem der Ansprüche 1 bis 11 besteht

## Claims

1. Moulding composition which comprises the following components,
I. from 0.1 to less than 5 parts by weight of a polyamine-polyamide graft copolymer which is prepared using the following monomers:
a) from 0.5 to 25% by weight, based on the graft copolymer, of a branched polyamine having at least 4 nitrogen atoms and a number-average molar mass Mₙ of at least 146 g/mol, and
b) polyamide-forming monomers selected from lactams, ω-aminocarboxylic acids, and/or from equimolar combinations of diamine and dicarboxylic acid, and
II. from more than 95 to 99.9 parts by weight of a thermoplastic polyester,
where the total of the parts by weight of I. and II. is 100.

2. Injection moulding composition composed of:
A. at least 40% by weight of a mixture of
I. from 0.1 to 20 parts by weight of a polyamine-polyamide graft copolymer which is prepared using the following monomers:
a) from 0.5 to 25% by weight, based on the graft copolymer, of a branched polyamine having at least 4 nitrogen atoms and a number-average molar mass Mₙ of at least 146 g/mol, and
b) polyamide-forming monomers selected from lactams, ω-aminocarboxylic acids, and/or from equimolar combinations of diamine and dicarboxylic acid, and
II. from 80 to 99.9 parts by weight of a thermoplastic polyester,
where the total of the parts by weight of I. and II. is 100;
B. at most 60% by weight of additives, selected from
- impact modifiers conventional for polyesters,
- other polymers selected from polycarbonate, acrylate homo- and copolymers, methacrylate homo- and copolymers, styrene-acrylonitrile-copolymers and acrylonitrilebutadiene-styrene copolymers (ABS),
- fillers,
- pigments,
- reinforcing materials,
- additions which give the moulding composition antielectrostatic properties or electrical conductivity,
- flame retardants and
- conventional auxiliaries or additives, selected from plasticizers, waxes, nucleating agents, antioxidants, UV stabilizers and hydrolysis stabilizers.

3. Moulding composition composed of:
A. from 40 to 99.5% by weight of a mixture made from
I. from 0.1 to 20 parts by weight of a polyamine-polyamide graft copolymer which is prepared using the following monomers:
a) from 0.5 to 25% by weight, based on the graft copolymer, of a branched polyamine having at least 4 nitrogen atoms and a number-average molar mass Mₙ of at least 146 g/mol, and
b) polyamide-forming monomers selected from lactams, ω-aminocarboxylic acids, and/or from equimolar combinations of diamine and dicarboxylic acid, and
II. from 80 to 99.9 parts by weight of a thermoplastic polyester,
where the total of the parts by weight of I. and II. is 100,
B. from 0.5 to 60% by weight of particulate, laminar and/or fibrous additives selected from fillers, pigments, reinforcing materials, additives which give the moulding composition antistatic properties or electrical conductivity, nucleating agents, and particulate flame retardants,
C. at most 59.5% by weight of additives, selected from
- impact modifiers conventional for polyesters,
- other polymers selected from polycarbonate, acrylate homo- and copolymers, methacrylate homo- and copolymers, styrene-acrylonitrile-copolymers and acrylonitrilebutadiene-styrene copolymers (ABS),
- conventional auxiliaries or additives, selected from plasticizers, waxes, nucleating agents, antioxidants, UV stabilizers and hydrolysis stabilizers.

4. Moulding composition or injection moulding composition according to any of the preceding claims,
**characterized in that**
the thermoplastic polyester has been selected from the group consisting of polyethylene terephthalate, polypropylene terephthalate, polybutylene terephthalate, polyethylene 2,6-naphthalate, polypropylene 2,6-naphthalate and polybutylene 2,6-naphthalate.

5. Moulding composition or injection moulding composition according to any of the preceding claims,
**characterized in that**
the polyamine-polyamide graft copolymer is prepared using from 1 to 20% by weight of the polyamine.

6. Moulding composition or injection moulding composition according to any of the preceding claims,
**characterized in that**
the polyamine-polyamide graft copolymer is prepared using from 1.5 to 16% by weight of the polyamine.

7. Moulding composition or injection moulding composition according to any of the preceding claims,
**characterized in that**
the polyamine contains at least 8 nitrogen atoms.

8. Moulding composition or injection moulding composition according to any of the preceding claims,
**characterized in that**
the polyamine contains at least 11 nitrogen atoms.

9. Moulding composition or injection moulding composition according to any of the preceding claims,
**characterized in that**
the polyamine has a number-average molar mass Mₙ of at least 500 g/mol.

10. Moulding composition or injection moulding composition according to any of the preceding claims,
**characterized in that**
the polyamine has a number-average molar mass Mₙ of at least 800 g/mol.

11. Moulding composition or injection moulding composition according to any of the preceding claims,
**characterized in that**
the concentration of amino groups in the graft copolymer is in the range from 100 to 2500 mmol/kg.

12. Moulding produced using a moulding composition or injection moulding composition according to any of the preceding claims.

13. Moulding according to Claim 12,
**characterized in that**
the moulding is a composite having two or more layers and comprising one or more layers made from a moulding composition or injection moulding composition according to any of Claims 1 to 11.

14. Moulding according to Claim 12,
**characterized in that**
the moulding is entirely composed of a moulding composition or injection moulding composition according to any of Claims 1 to 11.

## Revendications

1. Masse de moulage renfermant les composants suivants :
I. 0,1 à moins de 5 parts de poids d'un copolymère greffé polyamine/polyamide fabriqué au moyen des monomères suivants :
a) 0,5 à 25 % en poids par rapport au copolymère greffé d'une polyamine ramifiée avec au moins 4 atomes d'azote d'une masse moléculaire moyenne en nombre Mₙ de 146 g/mol au moins ainsi que
b) monomères formant du polyamide, sélectionnés parmi : Lactamen, aminoacides ω et/ou combinaisons équimolaires de diamine et d'acide dicarboxylique,
II. plus de 95 à 99,9 parts en poids d'un polyester thermoplastique,
la somme des parts en poids de I. et de II. étant 100.

2. Masse de moulage à injecter composée de :
A. au moins 40 % en poids d'un mélange de
I. 0,1 à 20 parts en poids d'un copolymère greffé polyamine/polyamide fabriqué au moyen des monomères suivants :
a) 0,5 à 25 % en poids par rapport au copolymère greffé d'une polyamine ramifiée avec au moins 4 atomes d'azote d'une masse moléculaire moyenne en nombre Mₙ de 146 g/mol au moins ainsi que
b) monomères formant du polyamide, sélectionnés parmi : Lactamen, aminoacides ω et/ou combinaisons équimolaires de diamine et d'acide dicarboxylique.
II. 80 à 99,9 parts en poids d'un polyester thermoplastique,
la somme des parts en poids de I. et de II. étant 100 ;
B. au maximum 60 % en poids d'adjuvants sélectionnés à partir de
- agents de résilience usuels pour le polyster,
- autres polymères, sélectionnés parmi : polycarbonate, homo et copolymères acrylate, homo et copolymères méthacrylate, copolymères de styrène-acrylonitrile et copolymères acrylonitrile butadiène styrène (ABS),
- charges
- pigments
- agents de renfort
- adjuvants conférant à la masse de moulage des propriétés antiélectrostatiques ou une conductibilité électrique,
- agents ignifuges
- adjuvants ou additifs usuels sélectionnés parmi : plastifiants, cires, agents de nucléation, antioxydants, stabilisateurs aux UV et stabilisateurs d'hydrolyse.

3. Masse de moulage composée de :
A. 40 à 99,5 % en poids d'un mélange de :
I. 0,1 à 20 parts en poids d'un copolymère greffé polyamine/polyamide fabriqué au moyen des monomères suivants :
a) 0,5 à 25 % en poids par rapport au copolymère greffé d'une polyamine ramifiée avec au moins 4 atomes d'azote d'une masse moléculaire moyenne en nombre Mₙ de 146 g/mol au moins ainsi que
b) monomères formant du polyamide, sélectionnés parmi : Lactamen, aminoacides ω et/ou combinaisons équimolaires de diamine et d'acide dicarboxylique.
II. 80 à 99,9 parts en poids d'un polyester thermoplastique,
la somme des parts en poids de I. et de II. étant 100,
B. 0,5 à 60 % en poids d'adjuvants formant des particules, des plaquettes et/ou des fibres, sélectionnés parmi : charges, pigments, agents de renfort, adjuvants conférant à la masse de moulage des propriétés antiélectrostatiques ou une conductibilité électrique, agents de nucléation et agents ignifugeants sous forme de particules,
C. au maximum 59,5 % en poids d'adjuvants sélectionnés parmi :
- agents de résilience usuels pour le polyster,
- autres polymères, sélectionnés parmi : polycarbonate, homo et copolymères acrylate, homo et copolymères méthacrylate, copolymères de styrène-acrylonitrile et copolymères acrylonitrile butadiène styrène (ABS),
- adjuvants ou additifs usuels sélectionnés parmi : plastifiants, cires, agents de nucléation, antioxydants, stabilisateurs aux UV et stabilisateurs d'hydrolyse.

4. Masse de moulage, resp. masse de moulage à injecter selon l'une de revendications précédentes,
**caractérisée en ce que**
le polyester thermoplastique est sélectionné parmi le groupe polyéthylène terephtalate, polypropylène terephtalate, polybutylène terephtalate, polyéthylène 2.6 naphtalate, polypropylène 2.6 naphtalate et polybutylène 2.6 naphtalate

5. Masse de moulage, resp. masse de moulage à injecter selon l'une des revendications précédentes,
**caractérisée en ce que**
le copolymère greffé polyamine/polyamide est fabriqué à partir de 1 à 20 % en poids de la polyamine.

6. Masse de moulage, resp. masse de moulage à injecter selon l'une des revendications précédentes,
**caractérisée en ce que**
le copolymère greffé polyamine/polyamide est fabriqué à partir de 1,5 à 16 % en poids de la polyamine.

7. Masse de moulage, resp. masse de moulage à injecter selon l'une des revendications précédentes,
**caractérisée en ce que**
la polyamine comprend au moins 8 atomes d'azote.

8. Masse de moulage, resp. masse de moulage à injecter selon l'une des revendications précédentes,
**caractérisée en ce que**
la polyamine comprend au moins 11 atomes d'azote.

9. Masse de moulage, resp. masse de moulage à injecter selon l'une des revendications précédentes,
**caractérisée en ce que**
la masse moléculaire moyenne en nombre de la polyamine Mₙ est au moins de 500 g/mol.

10. Masse de moulage, resp. masse de moulage à injecter selon l'une des revendications précédentes,
**caractérisée en ce que**
la masse moléculaire moyenne en nombre de la polyamine Mₙ est au moins de 800 g/mol.

11. Masse de moulage, resp. masse de moulage à injecter selon l'une des revendications précédentes,
**caractérisée en ce que**
la concentration en groupes amino du copolymère greffé se situe dans la plage de 100 à 2500 mmol/kg.

12. Pièce moulée fabriquée à partir d'une masse de moulage resp. d'une masse de moulage à injecter selon l'une des revendications précédentes.

13. Pièce moulée selon la revendication 12,
**caractérisée en ce que**
elle se présente sous la forme d'un composite multicouches renfermant une ou plusieurs couches d'une masse de moulage resp. d'une masse de moulage à injecter selon l'une des revendications 1 à 11.

14. Pièce moulée selon la revendication 12,
**caractérisée en ce que**
elle est composée intégralement d'une masse de moulage resp. d'une masse de moulage à injecter selon l'une des revendications 1 à 11.
